Europäisches Patentamt

European Patent Office

Office européen des brevets

(19)

(11) Veröffentlichungsnummer : **0 018 700**
**B1**

(12) **EUROPÄISCHE PATENTSCHRIFT**

(45) Veröffentlichungstag der Patentschrift :
15.12.82

(51) Int. Cl.³ : **C 01 B 3/22**

(21) Anmeldenummer : **80200425.9**

(22) Anmeldetag : **07.05.80**

(54) Verfahren zur Erzeugung von Kohlenmonoxid und Wasserstoff aus Methanol.

(30) Priorität : 08.05.79 DE 2918405

(43) Veröffentlichungstag der Anmeldung :
12.11.80 (Patentblatt 80/23)

(45) Bekanntmachung des Hinweises auf die Patenterteilung : 15.12.82 Patentblatt 82/50

(84) Benannte Vertragsstaaten :
AT DE FR GB NL

(56) Entgegenhaltungen :
DE A 877 746
FR A 1 215 969
FR A 2 181 795
US A 2 010 427
US A 3 179 500
US A 4 088 450
CHEMICAL ABSTRACTS, Band 90, Nr. 10, März
1979, Zusammenfassung Nr. 74249t, Seite 133,
Columbus, Ohio, US.

(73) Patentinhaber : **METALLGESELLSCHAFT AG**
**Reuterweg 14 Postfach 3724**
**D-6000 Frankfurt/M.1/(DE)**

(72) Erfinder : **Jockel, Heinz, Dipl.-Ing.**
**Hauptstrasse 67**
**D-6087 Büttelborn (DE)**
Erfinder : **Marschner, Friedemann, Dipl.-Ing.**
**Ruppertshainer Strasse 27**
**D-6370 Oberursel 6 (DE)**
Erfinder : **Möller, Friedrich-Wilhelm, Dr. Dipl.-Chem.**
**Breslauer Ring 15**
**D-6382 Friedrichsdorf (DE)**
Erfinder : **Mörtel, Hans-Günter, Dipl.-Ing.**
**Fuchshohl 113**
**D-6000 Frankfurt 50 (DE)**

(74) Vertreter : **Fischer, Ernst, Dr.**
**Reuterweg 14**
**D-6000 Frankfurt am Main 1 (DE)**

Verfahren zur Erzeugung von Kohlenmonoxid und Wasserstoff aus Methanol

Die Erfindung betrifft ein Verfahren zur Erzeugung von Kohlenmonoxid und Wasserstoff durch Spalten von dampfförmigem wasserhaltigem Methanol an einem indirekt beheizten zinkhaltigen Katalysator unter einem Druck im Bereich von 2 bis 50 bar bei Temperaturen von 200 bis 500 °C und Entfernen von Verunreinigungen aus dem Produktgas der Spaltung.

Ein solches Verfahren ist aus FR-A-2181795 bekannt, wobei man $H_2$ gewinnt, so daß im Produktgas wenig CO erwünscht ist. Zur Spaltung benutzt man kupferhaltige Katalysatoren, über die ein dampfförmiges Gemisch aus Methanol und Wasser geleitet wird. Aus dem Produktgas wird $CO_2$ ausgewaschen. Aus der FR-A-1215969 kennt man die Abtrennung von $H_2$ aus einem als Verunreinigungen Kohlenoxide enthaltenden Gasgemisch mit zeolitischen Molekularsieben. Sobald das die Verunreinigungen adsorbierende Molekularsieb mit CO bis zur Sättigung beladen ist, erfolgt die Regenerierung durch Erhitzen.

Der Erfindung liegt die Aufgabe zugrunde, das Produktgas auf kostengünstige Weise in CO und ein $H_2$-reiches Gas so zu zerlegen, daß die Anlage auch für relativ geringe Produktionsmengen ausgelegt werden kann. Erfindungsgemäß wird dies dadurch erreicht, daß das Produktgas nach der Entfernung von Verunreinigungen adsorptiv in die Komponenten CO und $H_2$ zerlegt wird, wobei man das Produktgas mit einem Druck von 2 bis 10 bar einem von mehreren Adsorbern aufgibt, welche Molekularsiebmaterial vom Zeolithtyp enthalten, der für Wasserstoff weitgehend durchlässig ist, und man jeden Adsorber durch Zufuhr von Produktgas belädt und $H_2$ abführt, die Beladung bis über den CO-Durchbruch fortsetzt und das abströmende CO-$H_2$-Gemisch einem anderen Adsorber aufgibt, den beladenen Adsorber mit praktisch reinem CO zum Entfernen von restlichem $H_2$ durchspült, anschließend den Adsorber entspannt und dabei durch Desorption das praktisch reine CO entfernt, den entspannten Adsorber mit einem Teil des abgeführten $H_2$ wieder bespannt und erneut Produktgas zur Adsorption zuführt. Geeignete Molekularsiebe haben üblicherweise einen definierten Porendurchmesser von 3 bis 5 Angström.

Bei der katalytischen Spaltung des Methanoldampfes wird ein die Komponenten CO und $H_2$ zu mindestens 90 Vol.-% enthaltendes Produktgas erzeugt. Für das Verfahren muß das Methanol nicht besonders rein sein. Der der Spaltung aufgegebene Methanoldampf soll höchstens 20 Gew.-% und vorzugsweise 2 bis 10 Gew.-% Wasserdampf enthalten, damit der $CO_2$-Gehalt im Produktgas niedrig bleibt. Für die nachfolgende adsorptive Abtrennung des Kohlenmonoxids ist es von Vorteil, wenn das Produktgas aus der Spaltung höchtens 1 Vol.-% Methan enthält, da dieses Methan bei der adsorptiven Trennung mit dem Kohlenmonoxid abgezogen wird.

Für die Spaltung des Methanoldampfes können unterschiedlich zusammengesetzte zinkhaltige Katalysatoren verwendet werden. Geeignet ist ein Katalysator mit 50 bis 90 Gew.-% ZnO und zusätzlich 10 bis 30 Gew.-% $Cr_2O_3$. Für diesen Katalysator hält man die Temperaturen in der Spaltung auf etwa 300 bis 500 °C und vorzugsweise auf 350 bis 450 °C.

Verwendbar ist auch ein Katalysator, der zu 20 bis 50 Atom-% aus Zink, zu 40 bis 60 Atom-% aus Kupfer und zu 10 bis 20 Atom-% aus Vanadium besteht. Für diesen Katalysator liegen die Spalttemperaturen niedriger, und zwar bei etwa 200 bis 300 °C und vorzugsweise bei 250 bis 270 °C. Einzelheiten der Herstellung dieses Katalysatortyps sind aus dem deutschen Patent 19 30 702 und dem dazu korrespondierenden US-Patent 3 897 471 bekannt. In diesen Veröffentlichungen wird der Katalysator für die Methanolsynthese vorgeschlagen.

Die katalytische Spaltung des Methanoldampfes erfolgt zweckmäßigerweise in einem Röhrenreaktor, dessen mit Katalysatormaterial gefüllte Röhren von außen ein Flüssigkeitsbad beheizt werden. Die Temperaturzufuhr ist nötig, weil die Methanolspaltung Wärme verbraucht.

Das aus der Spaltung kommende Produktgas enthält als Verunreinigungen vor allem Wasserdampf und/oder Kohlendioxid, die man vor der Weiterbehandlung des Gases entfernen sollte. Der Wasserdampf kann durch Kondensation abgetrennt werden und für das $CO_2$ lassen sich z.B. bekannte Waschverfahren, etwa mit Monoäthanolamin, verwenden. Für die Abtrennung dieser Verunreinigungen kommen aber auch bekannte Adsorptionsverfahren, so z.B. mit Hilfe von Molekularsieben, in Frage.

Die adsorptive Trennung von Kohlenmonoxid und Wasserstoff wird erleichtert, wenn zuvor die genannten Verunreinigungen möglichst sauber abgetrennt wurden. Die Güte dieser Abtrennung richtet sich aber auch nach der gewünschten Reinheit des zu erzeugenden Kohlenmonoxids bzw. Wasserstoffs.

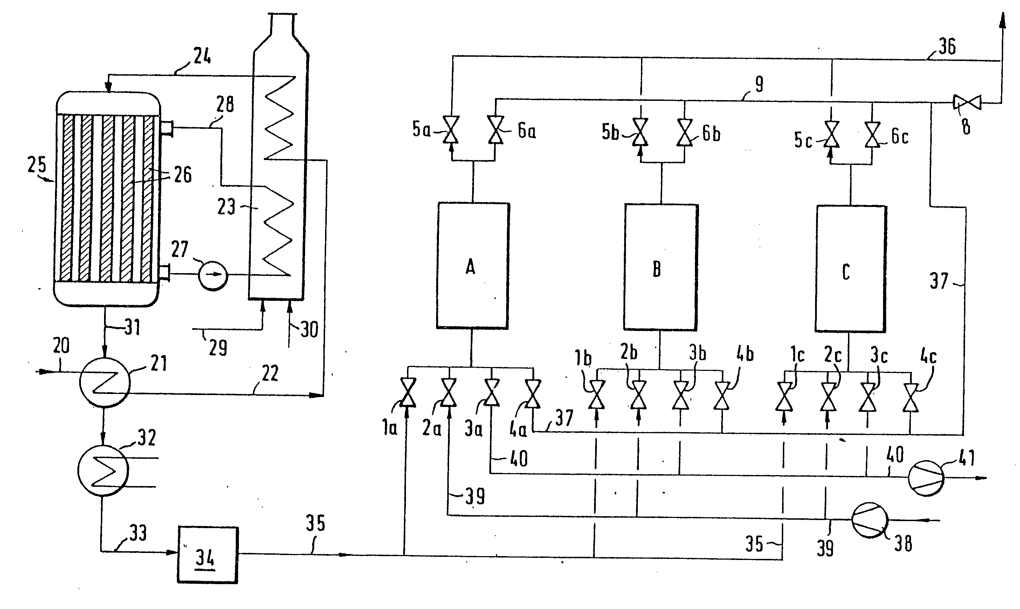

Eine Ausführungsform des Verfahrens wird mit Hilfe der Zeichnung erläutert.

Flüssiges Methanol wird in der Leitung 20 herangeführt und im Wärmeaustauscher 21 verdampft. Das verdampfte Methanol strömt in der Leitung 22 zu einem gefeuerten Erhitzer 23 und verläßt diesen in der Leitung 24 z.B. mit Temperaturen von 300 bis 500 °C.

Der Methanoldampf tritt dann in einen Röhrenreaktor 25 ein. In den Röhren 26 befindet sich ein zinkhaltiger Katalysator; die Röhren sind von einem heißen Salzbad umgeben, das mit Hilfe der Kreislaufpumpe 27 durch den Erhitzer 23 und über die Leitung 28 umgewälzt wird. Der Erhitzer 23 wird mit Luft aus der Leitung 29 und mit Brennstoff aus der Leitung 30 versorgt.

Das Produktgas aus der Spaltung des Methanols verläßt den Reaktor 25 durch die Leitung 31 und strömt zunächst durch den Wärmeaustauscher 21 und dann durch einen weiteren Wärmeaustauscher 32. Das Produktgas, welches den Wärmeaustauscher 32 in der Leitung 33 verläßt, besteht zu mindestens 90 Vol.-% aus CO und $H_2$ und weist die beiden Komponenten vorzugsweise zu mindestens 95 Vol.-% auf.

Es wird zunächst von solchen Verunreinigungen befreit, die in der nachfolgenden adsorptiven Trennung stören würden. Solche Verunreinigungen sind vor allem Wasserdampf oder $CO_2$. Zu diesem Zweck wird das Produktgas durch eine Reinigungsstufe 34 geführt. Die Reinigungsstufe kann in bekannter Weise zum Trocknen des Gases und auch zum Entfernen von $CO_2$ ausgestaltet sein. Die Entfernung des $CO_2$ kann entfallen, wenn der $CO_2$-Gehalt im Gas in der Leitung 33 bereits niedrig genug ist und etwa unterhalb von 5 Vol.-% liegt, so daß Reste von $CO_2$ im abgetrennten CO nicht stören. Dies hängt aber von der gewünschten Reinheit des gewonnenen Kohlenmonoxids ab.

Ein Gas, das praktisch nur noch aus Kohlenmonoxid und Wasserstoff besteht, wird in der Leitung 35 zur adsorptiven Trennung geführt. Die Trennlage weist drei Adsorber A, B und C auf, die mit einem geeigneten Zeolithen gefüllt sind. Zum Adsorber A gehören die Leitungen mit den Ventilen 1a, 2a, 3a, 4a, 5a und 6a. Entsprechend gehören zum Adsorber B die Leitungen mit den Ventilen 1b bis 6b und zum Adsorber C die Leitungen mit den Ventilen 1c bis 6c. Alle drei Adsorber durchlaufen nacheinander dieselben Verfahrensschritte, doch befindet sich jeder Adsorber zu einer bestimmten Zeit in einem anderen Betriebszustand. Zur Erläuterung der Arbeitsweise der Trennanlage werden hier zunächst die aufeinanderfolgenden Verfahrensschritte im Adsorber A betrachtet.

Aus der Leitung 35 strömt durch das geöffnete Ventil 1a das CO-$H_2$-Gemisch in den Adsorber A. Das Adsorptionsmaterial läßt den Wasserstoff passieren, der über das geöffnete Ventil 5a zur Wasserstoffsammelleitung 36 strömt. Die übrigen, zum Adsorber A gehörenden Ventile sind geschlossen. Der Adsorber belädt sich mehr und mehr mit Kohlenmonoxid und bindet auch einen geringen Anteil des Wasserstoffs.

Sobald der Adsorber A mit CO so weit beladen ist, daß CO durchbricht und im abströmenden Wasserstoff enthalten ist, wird das Ventil 5a geschlossen und das Ventil 6a geöffnet. Das nun vom Adsorber A kommende CO-$H_2$-Gemisch wird über die Leitungen 9 und 37 und das geöffnete Ventil 4b zum Adsorber B geführt, der in diesem Moment auf Adsorption umgeschaltet worden ist. Über das geöffnete Ventil 5b strömt Wasserstoff aus dem Adsorber B zur Sammelleitung 36.

Einige Zeit nach dem CO-Durchbruch im Adsorber A wird die Gaszufuhr über das Ventil 1a unterbrochen und dann der Adsorber A gespült. Zum Spülen leitet man aus einem nicht dargestellten Vorratsbehälter CO mit Hilfe des Gebläses 38 über die Leitung 39 und das geöffnete Ventil 2a in den Adsorber A. Dieses CO verdrängt im Adsorber A den dort vorhandenen Wasserstoff, der über das geöffnete Ventil 6a, die Leitungen 9 und 37 und das geöffnete Ventil 4b ebenfalls zum Adsorber B geführt wird.

Nach der Spülung ist der Adsorber A nur noch mit CO beladen, das im Desorptionsschritt abgezogen und gewonnen wird. Zu diesem Zweck werden die Ventile 5a und 6a geschlossen und der Adsorber A über das geöffnete Ventil 3a entspannt, wobei Kohlenmonoxid durch die Leitung 40 und die Pumpe 41 abgezogen wird. Vorzugsweise ist die Pumpe 41 als Vakuumpumpe ausgebildet, so daß sich im Adsorber A bei der Desorption unteratmosphärische Drücke von etwa 50 bis 500 mbar erreichen lassen. Die Pumpe 41 drückt das CO in den bereits erwähnten, nicht dargestellten Vorratsbehälter.

Nach der Desorption muß der Druck im Adsorber A wieder angehoben werden, damit der Druck des Gases in der Leitung 35 keinen schädlichen Druckstoß ausübt. Zum Druckausgleich gibt man bei geschlossenen Ventilen 1a bis 5a über das geöffnete Ventil 6a $H_2$-Gas aus der Leitung 36 über das Regelventil 8 in der Adsorber A. Nach dem Druckausgleich wird der Adsorber A wieder auf Adsorption geschaltet, wobei ihm Gas aus der Leitung 35 über das geöffnete Ventil 1a und kurzzeitig auch CO-$H_2$-Gemisch (Durchbruchsgas) vom Adsorber C über die Leitungen 9 und 37 und das geöffnete Ventil 4a aufgegeben wird. Nach Umstellen des Adsorbers C auf Spülen läuft im Adsorber A die Adsorption von Produktgas aus der Leitung 35 weiter bis über den CO-Durchbruch hinaus, wie das bereits beschrieben wurde.

Wie bereits erläutert, befindet sich jeder der drei Adsorber zu einer bestimmten Zeit in einem unterschiedlichen Betriebszustand. Wenn im Adsorber A die Desorption beginnt, ist der Adsorber B auf Adsorption von Gas aus der Leitung 35 geschaltet und gibt Wasserstoff an die Sammelleitung 36 ab. Zu diesem Zeitpunkt wird der Adsorber C mit CO aus dem Vorratsbehälter über das Gebläse 38 gespült. Damit die Leitungen 9 und 37 für unterschiedliche Gase benutzt werden können, finden Spülen, Druckausgleich und die Abgabe von Durchbruchsgas in den verschiedenen Adsorbern zu jeweils verschiedenen Zeitspannen statt.

Beispiel

In einer der Zeichnung entsprechenden Verfahrensführung wird folgendermaßen gearbeitet: Pro Stunde werden 1 000 kg flüssiges Methanol von 10 °C und 22 bar in der Leitung 20 herangeführt und in Wärmeaustauscher 21 auf 160 °C gebracht und dabei verdampft. Der Methanoldampf wird in gefeuerten Überhitzer 23 auf eine Temperatur von 400 °C überhitzt und in der Leitung 24 dem Röhrenreaktor 25 zugeführt. Im Reaktor 25 verteilt sich der überhitzte Methanoldampf auf 280 Röhren, die mit Katalysator gefüllt sind. Der Katalysator besteht zu 78 Gew.-% aus ZnO und zu 22 Gew.-% aus $Cr_2O_3$. Zum

indirekten Beheizen der Röhren des Reaktors 25 dient eine Salzschmelze mit einem Schmelzpunkt von 140 °C, die zu 59 Gew.-% aus Kaliumnitrat und zu 41 Gew.-% aus Natriumnitrit besteht.

Das den Reaktor 25 verlassende Produktgas, das in der Leitung 31 zum Wärmeaustauscher 21 geführt wird, fällt, pro Stunde in einer Menge von 2 065 Nm³ an und besteht aus 30,3 Vol.-% CO, 67,1 Vol.-% $H_2$ und 2,3 Vol.-% $CO_2$. Dieses Gas weist eine Temperatur von 450 °C und einen Druck von 20 bar auf ; es ist methanfrei. Das Gas wird im Wärmeaustauscher 21 auf 50 °C abgekühlt und im nachfolgenden Kühler 32 mittels Kühlwasser auf 30 °C abgekühlt.

In der Leitung 33 strömt das Gas mit einem Druck von 19,5 bar zur Reinigungsstufe 34. Diese Stufe besteht aus zwei mit handelsüblichem Molekularsieb gefüllten Adsorbern, die wechselweise auf Adsorption und Regeneration geschaltet sind. In den Adsorbern wird das Gas von restlichem Wasser, $CO_2$ und Methanolspuren befreit. Die thermische Regeneration des Molekularsiebs wird mit wasserstoffreichem Gas aus der Leitung 36 der nachfolgend beschriebenen Adsorptionsanlage betrieben.

Dieses wasserstoffreiche Gas steht mit einem Druck von 3,4 bar an. Jeder Adsorber der Reinigungsstufe 34 ist für 8 Stunden in den Adsorptionsbetrieb geschaltet. Die anschließende Desorption erfolgt noch unter zusätzlichem Benutzen eines Erhitzers zum Erzeugen der Desorptionswärme im Regeneriergas sowie mit einem Kühler und Abscheider zum Abkühlen des Regeneriergases nach Verlassen des zu regenerierenden Adsorbers. Diese Einzelheiten sind in der Zeichnung nicht berücksichtigt.

Das die Reinigungsstufe 34 in der Leitung 35 verlassende Gas besteht zu 31 Vol.-% aus CO und zu 69 Vol.-% aus $H_2$. Pro Stunde werden 2 010 Nm³ dieses Gases angeliefert. Das Gas wird zunächst auf 3,5 bar entspannt und dann durch einen der drei Adsorber A, B und C geleitet. Die Betriebsweise dieser drei Adsorber wurde bereits zuvor erläutert. Die Adsorber sind mit handelsüblichem Zeolith gefüllt.

Wie bereits beschrieben, durchläuft jeder der drei Adsorber A, B und C nacheinander die gleichen Betriebszustände, wobei sich zu einem bestimmten Zeitpunkt jeder Adsorber in einem anderen Betriebszustand befindet. Jeder Adsorber ist etwa für 3 Minuten auf Adsorption und für ebenfalls 3 Minuten auf Desorption geschaltet. Der Adsorptionszustand, bei welchem ein CO-$H_2$-Gemisch (Durchbruchsgas) den Adsorber verläßt, dauert etwa 1 Minute und auch für die nachfolgende Spülung mit CO wird etwa 1 Minute gebraucht. Bei der Desorption wird der Druck bis auf 100 mbar vermindert. Auch die nach jeder Desorption nötige Bespannung des Adsorbers (Druckausgleich) mit wasserstoffreichem Gas aus der Leitung 36 dauert etwa 1 Minute.

Das wasserstoffreiche Gas in der Leitung 36 besteht zu 94,1 Vol.-% aus $H_2$ und zu 5,9 Vol.-% aus CO. Das in der Leitung 40 abgeführte CO-Produktgas enthält 98 Vol.-% CO und 2 Vol.-% $H_2$, es hat eine Temperatur von 30 °C und etwa Atmosphärendruck. Falls man das wasserstoffreiche Gas in der Leitung 36 nicht anderweitig nutzen will, kann man den Überschuß auch zum Unterfeuern des Erhitzers 23 verwenden.

## Ansprüche

1. Verfahren zur Erzeugung von Kohlenmonoxid und Wasserstoff durch Spalten von dampfförmigem wasserhaltigem Methanol an einem indirekt beheizten zinkhaltigen Katalysator unter einem Druck im Bereich von 2 bis 50 bar bei Temperaturen von 200 bis 500 °C und Entfernen von Verunreinigungen aus dem Produktgas der Spaltung, dadurch gekennzeichnet, daß das Produktgas nach der Entfernung von Verunreinigungen adsorptiv in die Komponenten CO und $H_2$ zerlegt wird, wobei man das Produktgas mit einem Druck von 2 bis 10 bar einem von mehreren Adsorbern aufgibt, welche Molekularsiebmaterial vom Zeolithtyp enthalten, der für Wasserstoff weitgehend durchlässig ist, und man jeden Adsorber durch Zufuhr von Produktgas belädt und $H_2$ abführt, die Beladung bis über den CO-Durchbruch fortsetzt und das abströmende CO-$H_2$-Gemisch einem anderen Adsorber aufgibt, den beladenen Adsorber mit praktisch reinem CO zum Entfernen von restlichem $H_2$ durchspült, anschließend den Adsorber entspannt und dabei durch Desorption das praktisch reine CO entfernt, den entspannten Adsorber mit einem Teil des abgeführten $H_2$ wieder bespannt und erneut Produktgas zur Adsorption zuführt.

2. Verfahren nach Anspruch 1, dadurch gekennzeichnet, daß das Produktgas aus der Spaltung höchstens 1 Vol.-% Methan enthält.

3. Verfahren nach Anspruch 1 oder 2, dadurch gekennzeichnet, daß die Spaltung des Methanoldampfes an einem 50 bis 90 Gew.-% ZnO und zusätzlich 10 bis 30 Gew.-% $Cr_2O_3$ enthaltenden Katalysator bei Temperaturen von 300 bis 500 °C, vorzugsweise von 350 bis 450 °C, erfolgt.

4. Verfahren nach Anspruch 1 oder 2, dadurch gekennzeichnet, daß die Spaltung des Methanoldampfes an einem 20 bis 50 Atom-% Zink, 40 bis 60 Atom-% Kupfer und 10 bis 20 Atom-% Vanadium enthaltenden Katalysator bei Temperaturen von 200 bis 300 °C, vorzugsweise von 250 bis 270 °C, erfolgt.

5. Verfahren nach Anspruch 1 oder einem der folgenden, dadurch gekennzeichnet, daß der Katalysator in Röhren angeordnet ist, die von außen durch ein Flüssigkeitsbad beheizt werden.

6. Verfahren nach Anspruch 1 oder einem der folgenden, dadurch gekennzeichnet, daß als Verunreinigungen aus dem Produktgas Wasserdampf und/oder Kohlendioxid entfernt werden.

## Claims

1. A process for producing carbon monoxide and hydrogen by reacting vaporous methanol containing water vapor on an indirectly heated, zinc-containing catalyst at a pressure in the range of 2 to 50 bars and at temperatures of 200 to 500 °C and removing impurities from the product gas of said reaction, characterized in that the product gas after removing of said impurities is separated into the components CO and H₂ by adsorption by feeding said product gas under pressure of 2 to 10 bars to one of several zeolite type molecular sieve containing adsorbers where the zeolite is substantially permeable to hydrogen, each adsorber is charged by feeding product gas und withdrawing H₂ from said adsorber, continuing to charge beyond a breakthrough of CO and feeding the withdrawn CO-H₂-mixture to another adsorber, scavenging the charged adsorber with virtually pure CO to remove residual H₂, thereafter pressure-relieving the adsorber and removing the virtually pure CO by desorption, the pressure-relieved adsorber is again pressurized with a portion of the withdrawn H₂ and product gas is fed into the adsorber for adsorption

2. Process according to claim 1, characterized in that the product gas from the reaction contains methane not in excess of 1 % by volume.

3. Process according to claim 1 or 2, characterized in that the methanol vapor is reacted on a catalyst which contains 50 to 90 % by weight ZnO and additionally 10 to 30 % by weight Cr₂O₃ at temperature of 300 to 500 °C, preferably of 350 to 450 °C.

4. Process according to claim 1 or 2, characterized in that the methanol vapor is reacted on a catalyst which contains 20 to 50 atomic percent zinc, 40 to 60 atomic percent copper and 10 to 20 atomic percent vanadium, at temperatures of 200 to 300 °C, preferably 250 to 270 °C.

5. Process according to claim 1 or any of the following claims, characterized in that the catalyst is arranged in tubes which are heated from the outside by a liquid bath.

6. Process according to claim 1 or any of the following claims, characterized in that water vapor and/or carbon dioxide are removed as impurities from the product gas.

**Revendications**

1. Procédé de production d'oxyde de carbone et d'hydrogène par décomposition de vapeur de méthanol contenant de l'eau sur un catalyseur contenant du zinc chauffé de manière indirecte, en opérant sous une pression de 2 à 50 bars à des températures de 200 à 500 °C, et par élimination des impuretés du produit gazeux de décomposition, caractérisé en ce qu'il consiste à fractionner par adsorption en les constituants CO et H₂ le produit gazeux, après l'élimination des impuretés, en envoyant le produit gazeux sous une pression de 2 à 10 bars dans l'un de plusieurs adsorbeurs qui contiennent un tamis moléculaire de type zéolithe qui est essentiellement perméable à l'hydrogène, et en chargeant chaque adsorbeur en y envoyant du produit gazeux et en chassant H₂ de chaque adsorbeur, en poursuivant le chargement jusqu'au-delà du passage de CO et en envoyant le mélange sortant CO-H₂ dans un autre adsorbeur, en rinçant l'adsorbeur chargé à l'aide de CO pratiquement pur pour éliminer le H₂ restant, en mettant ensuite l'adsorbeur sous une pression moindre et en éliminant ainsi, par désorption, le CO pratiquement pur, en remettant sous pression l'adsorbeur par une partie du H₂ chassé et en envoyant à nouveau du produit gazeux à l'adsorption.

2. Procédé suivant la revendication 1, caractérisé en ce que le produit gazeux de la décomposition contient au plus 1 % en volume de méthane.

3. Procédé suivant la revendication 1 ou 2, caractérisé en ce qu'il consiste à effectuer la décomposition de la vapeur de méthanol sur un catalyseur contenant 50 à 90 % en poids de ZnO et, en plus, de 10 à 30 % en poids de Cr₂O₃, en opérant à des températures de 300 à 500 °C, de préférence de 350 à 450 °C.

4. Procédé suivant la revendication 1 ou 2, caractérisé en ce qu'il consiste à effectuer la décomposition de la vapeur de méthanol sur un catalyseur contenant de 20 à 50 % en atome de zinc, de 40 à 60 % en atome de cuivre et de 10 à 20 % en atome de vanadium, en opérant à des températures de 200 à 300 °C, de préférence de 250 à 270 °C.

5. Procédé suivant la revendication 1 ou l'une des suivantes, caractérisé en ce qu'il consiste à mettre le catalyseur dans des tubes qui sont chauffés de l'extérieur par un bain de liquide.

6. Procédé suivant la revendication 1 ou l'une des suivantes, caractérisé en ce qu'il consiste à éliminer du produit gazeux la vapeur d'eau et/ou le gaz carbonique comme impuretés.

0 018 700